# EUROPEAN PATENT SPECIFICATION

(11) **EP 3 321 390 B1**
(45) Date of publication and mention of the grant of the patent: **14.02.2024**
(21) Application number: 16910595.4
(22) Date of filing: 29.07.2016
(51) Int. Cl.: B22D 27/20, C22C 19/05, C22C 27/06, B22C 9/04, B22D 25/06, B22D 27/13, C22C 37/08, F01D 9/04, B22D 27/04, F02B 37/24

(54) **HEAT-RESISTANT CASTING**
HITZEBESTÄNDIGES GIESSEN
PIÈCE MOULÉE RÉSISTANTE À LA CHALEUR

(43) Date of publication of application: 16.05.2018
(73) Proprietor: Mitsubishi Steel MFG. CO., LTD., Tokyo (JP)
(72) Inventor: FUKUDA, Yoshizumi, Ichikawa-shi Chiba 272-0127 (JP); SODA, Yuji, Tokyo 104-8550 (JP); TAMURA, Masanori, Ichikawa-shi Chiba 272-0127 (JP); KOYAMA, Kenji, Amphur Sriracha Chonburi 20230 (TH)
(74) Representative: DREISS Patentanwälte PartG mbB
(86) International application number: PCT/JP2016/072454
(87) International publication number: WO 2018/020692

(56) References cited:
- EP-A1- 1 099 838
- EP-A1- 1 422 384
- EP-A2- 1 717 326
- WO-A1-2006/010383
- JP-A- H02 121 765
- JP-A- H05 277 657
- JP-A- 2001 181 741
- JP-A- 2001 181 741
- JP-A- 2004 098 075
- JP-A- 2006 265 621
- JP-B1- S4 838 060

## Description

### Technical Field

The present disclosure relates to a heat resistant casting having an axial portion with an excellent plastic processing characteristic.

### Background Art

Turbochargers installed on, for example, vehicle engines include a turbocharger called a variable nozzle turbocharger. The variable nozzle turbocharger is also called a variable geometry turbo, a VG turbo, a variable nozzle vane turbo, a variable geometry system, or a VGS turbo depending on manufacturers.

The variable nozzle turbocharger changes the opening ratio of an exhaust gas passage by opening/closing nozzle vanes disposed in the exhaust gas passage of the exhaust side turbine housing, in order to control a flow velocity and a flow rate of the exhaust gas to the exhaust side turbine wheel according to a rotational speed of the engine, thereby increasing a supercharging effect.

Many nozzle vanes are incorporated in the variable nozzle turbocharger. The variable nozzle turbocharger uses a high temperature exhaust gas, and therefore requires a high heat resistant characteristic.

Heat resistant castings such as nozzle vanes made of a heat resistant steel or a heat resistant alloy are incorporated into the body of the variable nozzle turbocharger by welding or plastic processing such as caulking.

When the heat resistant casting is incorporated into the body by welding, the body may cause distortion due to local heating or cooling, or the heat resistant casting or the body may be affected by heat. Otherwise, post processing may be required due to welding spatter.

In contrast, the heat resistant casting or the body characteristic is less affected when installed by plastic processing such as caulking. Usually, however, the heat resistant casting has a poor plastic deformation characteristic and does not deform uniformly, causing undesired deformation or a crack.

Therefore, a heat resistant casting having an excellent heat resistant characteristic as well as an excellent plastic processing characteristic is desired.

Nozzle vanes are manufactured by, for example, casting such as die casting or metal injection molding, followed by pressing an axis portion in an axial direction and pressing rear vanes, to form the nozzle vanes (see, e.g., Patent Document 1).

A manufacturing method of variable vanes of the VGS-type turbochargers including fining the solidified structure of a shaped raw material during casting, rolling the axis portion, and finishing has been disclosed (see, e.g., Patent Document 2).
[Patent Document 1] Japanese Patent Application Laid-Open (JP-A) No. 2010-196583
[Patent Document 2] Japanese Patent Application Laid-Open (JP-A) No. 2003-49655 A variable displacement turbo charger has been disclosed in EP 1 099 838 A1. EP 1 717 326 A2 describes a Ni based alloy member, its production method and a turbine engine part. A method for producing a low thermal expansion alloy has been disclosed in JP 2001 181741 A.

### SUMMARY OF INVENTION

### Technical Problem

In the technique disclosed in Patent Document 1, however, plastic processing that accompanies a large deformation is difficult, because the solidification structure is not intentionally controlled.

Meanwhile, the technique disclosed in Patent Document 2 only miniaturizes the structure, and does not easily allow the plastic processing that causes a large deformation.

It is an object of an embodiment of the present invention to provide a heat resistant casting having an excellent plastic processing characteristic to prevent occurrence of undesired deformation or a crack when the processing such as caulking that causes a large plastic deformation is executed.

### Solution to Problem

A solution to problem includes an embodiment described below.

A heat resistant casting, containing an axial portion; and dendrites in a structure of a region of the axial portion that is subjected to plastic processing, the dendrites having an average angle between a direction perpendicular to a central axis of the axial portion and main axes of the dendrites in a range of 20 degrees.

The dendrite is a dendritic crystal having a main axis and secondary dendrites branched from the main axis, and the main axis refers to a portion corresponding to a trunk.

The heat resistant casting, as used in the present specification, refers to a casting made of a heat resistant steel or a heat resistant alloy. The heat resistant casting of the present embodiment having a portion with an excellent plastic processing characteristic, and is preferably used in a case in which needs joining to other parts. Specifically, the heat resistant casting of the embodiment has a larger deformation in the region having an excellent plastic processing characteristic, compared to a conventional heat resistant casting, when processing such as caulking that accompanies a large plastic deformation. This allows the member to be fixed by caulking to have an improved filling ability into a groove or the like, thereby further increasing a joining strength.

The heat resistant casting as recited in <1>, further including iron, more than 0% by mass but equal to or less than 1.4% by mass of carbon, more than 0% by mass but equal to or less than 69% by mass of nickel, and 6% by mass to 52% by mass of chromium.

The heat resistant casting can be a nozzle vane of a turbocharger.

### Advantageous Effects of Invention

According to an embodiment of the invention, the heat resistant casting having an excellent plastic processing characteristic is provided and prevent an undesired deformation or a crack when the processing, such as caulking, that accompanies a large plastic deformation.

### BRIEF DESCRIPTION OF DRAWINGS

Fig. 1 is a schematic cross-sectional view of a heat resistant casting of Examples and Comparative Examples, when cut along a plane including the central axis of an axial portion, with an angle α formed between the main axis of a dendrite, which is shown in a frame, and a direction perpendicular to the central axis of the axial portion being shown schematically.
Fig. 2A is a photomicrograph showing a cross-section of a first sample of the heat resistant casting of Example 1 when cut along a plane including a central axis of an axial portion.
Fig. 2B is a partial enlarged photograph of a region subjected to plastic processing shown in the frame in Fig. 2A.
Fig. 3A is a photomicrograph showing a cross-section of a second sample of the heat resistant casting of Example 1 when cut along a plane including the central axis of the axial portion.
Fig. 3B is a partial enlarged photograph of a region subjected to plastic processing shown in the frame in Fig. 3A.
Fig. 4A is a photomicrograph showing a cross-section of a third sample of the heat resistant casting of Example 1 when cut along a plane including the central axis of the axial portion.
Fig. 4B is a partial enlarged photograph of a region subjected to plastic processing shown in the frame in Fig. 4A.
Fig. 5A is a photomicrograph showing a cross-section of a fourth sample of the heat resistant casting of Example 1 when cut along a plane including the central axis of the axial portion.
Fig. 5B is a partial enlarged photograph of a region subjected to plastic processing shown in the frame in Fig. 5A.
Fig. 6A is a photomicrograph showing a cross-section of a fifth sample of the heat resistant casting of Example 1 when cut in a direction perpendicular to the central axis of the axial portion.
Fig. 6B is a partial enlarged photograph of a region shown in the left frame in Fig. 6A.
Fig. 6C is partial enlarged photograph of a region shown in the right frame in Fig. 6A.
Fig. 7A is a photomicrograph showing a cross-section of a heat resistant casting of Comparative Example 1 when cut along a plane including the central axis of the axial portion.
Fig. 7B is partial enlarged photograph of a region subjected to plastic processing shown in the right frame in Fig. 7A.
Fig. 8 is a schematic partial side view of the heat resistant casting used as a caulking member.
Fig. 9A is a schematic partial plan view of a plate-like joining part for caulking (hereinafter simply referred to as a joining part) that is joined with the caulking member of Fig. 8.
Fig. 9B is a schematic partial cross-sectional view of the plate-like joining part that is joined with the caulking member of Fig. 8.
Fig. 10A is a schematic partial plan view of the joining part in which the caulking member is inserted into an opening of the joining part.
Fig. 10B is a schematic partial cross-sectional view of the joining part in which the caulking member is inserted into the opening of the joining part.
Fig. 11A is a schematic partial plan view of the joining part in which the caulking is finished after the caulking member is inserted into the opening of the joining part.
Fig. 11B is a schematic partial cross-sectional view of the joining part in which the caulking is finished after the caulking member is inserted into the opening of the joining part.
Fig. 12 is a photomicrograph showing a cross-section of a heat resistant casting of Comparative Example 2 when cut along a plane including the central axis of the axial portion.
Fig. 13 is a plane photograph showing an external appearance of the heat resistant casting of Example 1 seen from above after caulking processing.
Fig. 14A is a plane photograph showing an external appearance of an unacceptable heat resistant casting of Comparative Example 1 seen from above after caulking processing.
Fig. 14B is a plane photograph showing an external appearance of an unacceptable heat resistant casting of Comparative Example 2 seen from above after caulking processing.

### DESCRIPTION OF EMBODIMENTS

An embodiment of the invention will be described below in detail.

The inventors have found that a heat resistant casting having an axial portion includes dendrites in the structure of a region of the axial portion subjected to plastic processing, and that a plastic deformation characteristic of the dendrites toward main axes of the dendrites improves when an average angle between a direction perpendicular to a central axis of the axial portion and main axes of the dendrites is in a range of 20 degrees.

It is considered that, although its working mechanism is not obviously determined, the plastic deformation characteristic improves as the dendrites slide in the direction of the main axes during processing, because the dendrites have the average angle in the range of 20 degrees between the direction perpendicular to the central axis of the axial portion and the main axes of the dendrites.

A heat resistant casting of the present embodiment is a useful heat resistant casting capable of engaging with other members by plastic processing in that occurrence of undesired deformation or a crack is prevented when processing, such as caulking, that accompanies a large plastic deformation is executed as described above.

The embodiment is not limited in any respect by the predicted mechanism mentioned above.

The heat resistant casting of the embodiment achieves the effect of the embodiment as having the average angle between the direction perpendicular to the central axis of the axial portion and the main axes of the dendrites in the range of 20 degrees. The angle is preferably within a range of 15 degrees, and more preferably within a range of 10 degrees.

The main axes of the dendrites are confirmed by, for example, corroding a sample of the heat resistant casting after mirror polishing in an appropriate acid-containing liquid, and a corroded surface of the sample is observed by a stereo microscope at a magnification of from 20 to 80.

In the present specification, the average angle between the direction perpendicular to the central axis of the axial portion and the main axes of the dendrites is obtained by measuring the angles at plural positions for each sample at which the main axes of the dendrites and the perpendicular direction of the central axis of the axial portion can be clearly confirmed in the cross-section, and then averaging the measured values.

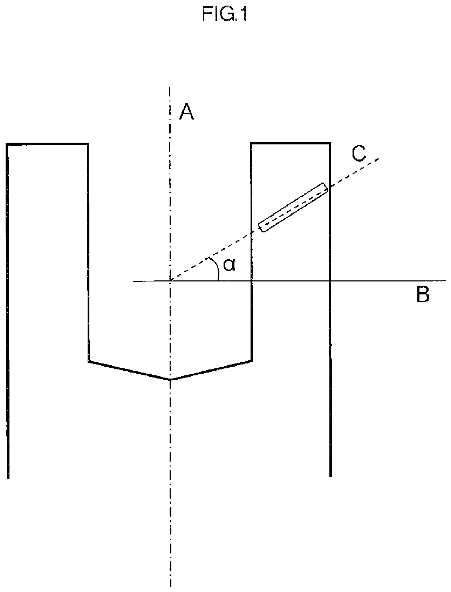

The angle between the direction perpendicular to the central axis of an axial portion of the heat resistant casting and the main axis of a dendrite is described by referring to Fig. 1. Fig. 1 is a schematic cross-sectional view of a heat resistant casting when cut along a plane including the central axis of an axial portion, with the main axis of a dendrite schematically shown by a frame line.

The central axis of the axial portion is indicated by A, the line perpendicular to the central axis of the axial portion is indicated by B, and the direction of the main axis of the dendrite schematically shown by the frame line is indicated by C.

As used in the specification, the angle between the direction perpendicular to the central axis of the axial portion of the heat resistant casting and the main axis of the dendrite is equal to an angle α, as shown in Fig. 1, that is formed between the line B, which is perpendicular to the central axis of the axial portion, and the line C, which indicates the direction of the main axis of the dendrite.

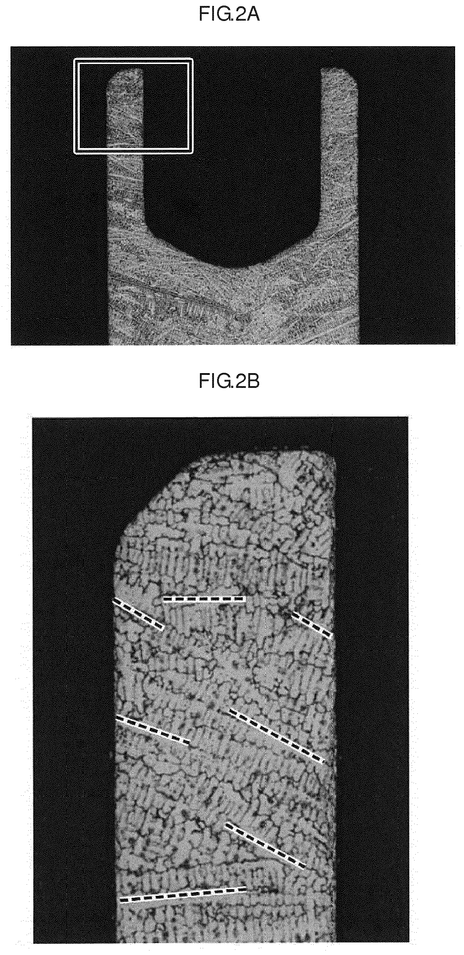

Samples shown in Figs. 2A to 5B are first to fourth samples randomly selected from a plurality of samples obtained in Example 1, which will be described later, and the selected samples are observed.

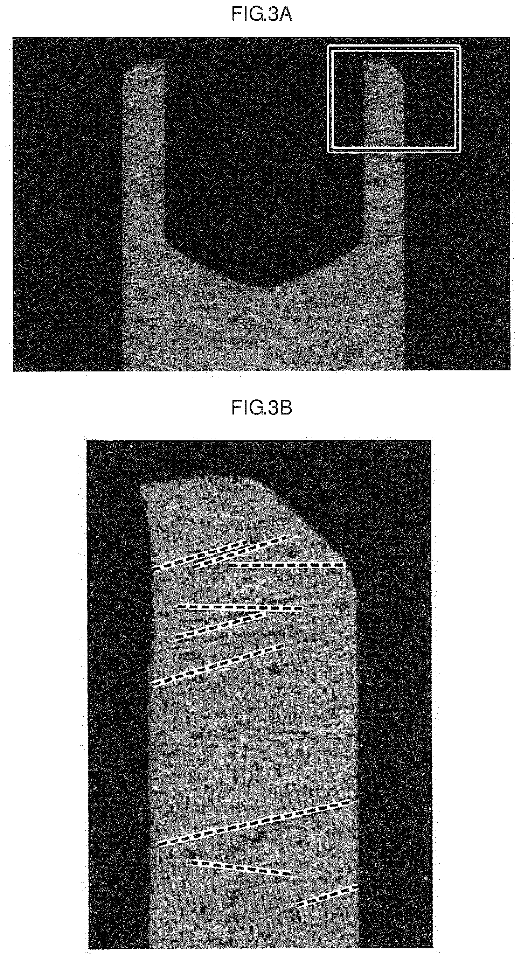

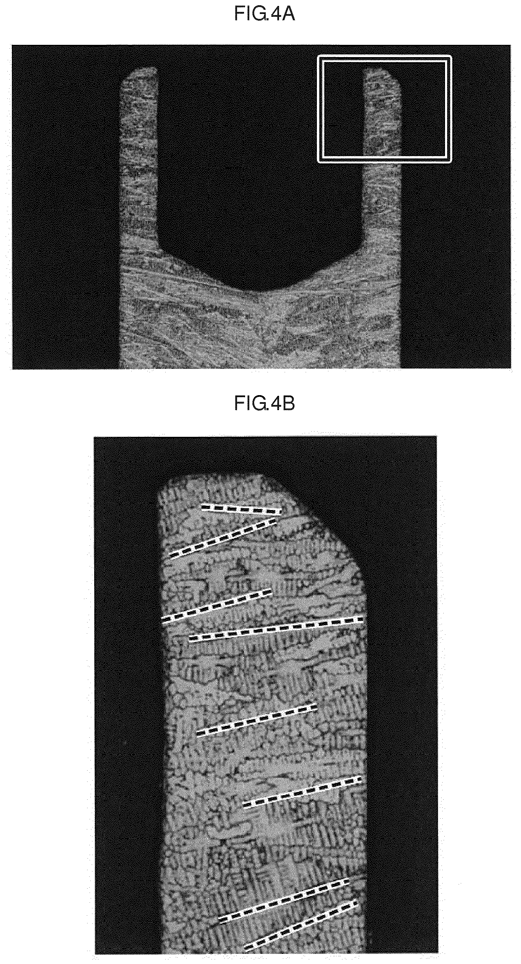

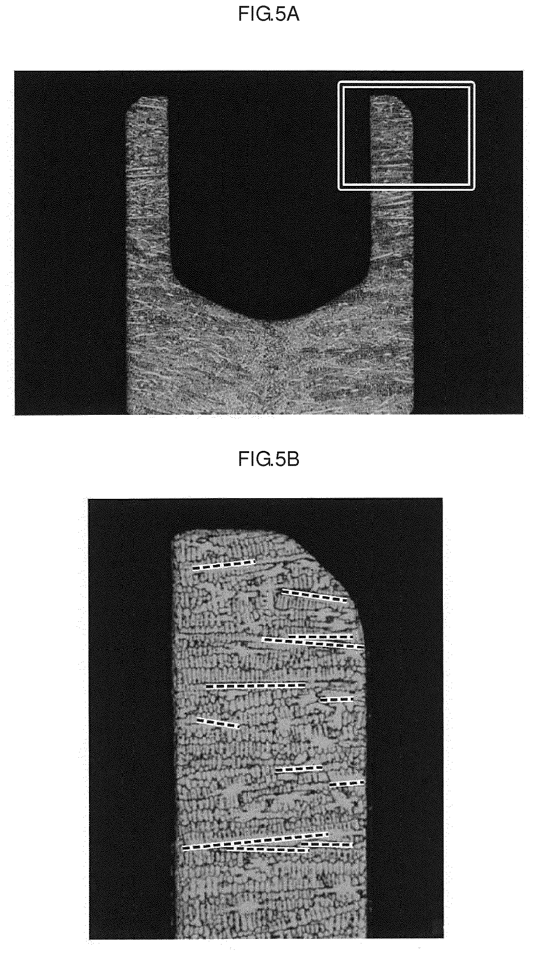

For example, a first sample shown in Fig. 2B has an average angle of 18.4 degrees between the direction perpendicular to the central axis of the axial portion and the main axes of the dendrites. Similarly, the angle is 10.3 degrees in a second sample shown in Fig. 3B, the angle is 12.1 degrees in a third sample shown in Fig. 4B, and the angle is 3.4 degrees in a fourth sample shown in Fig. 5B.

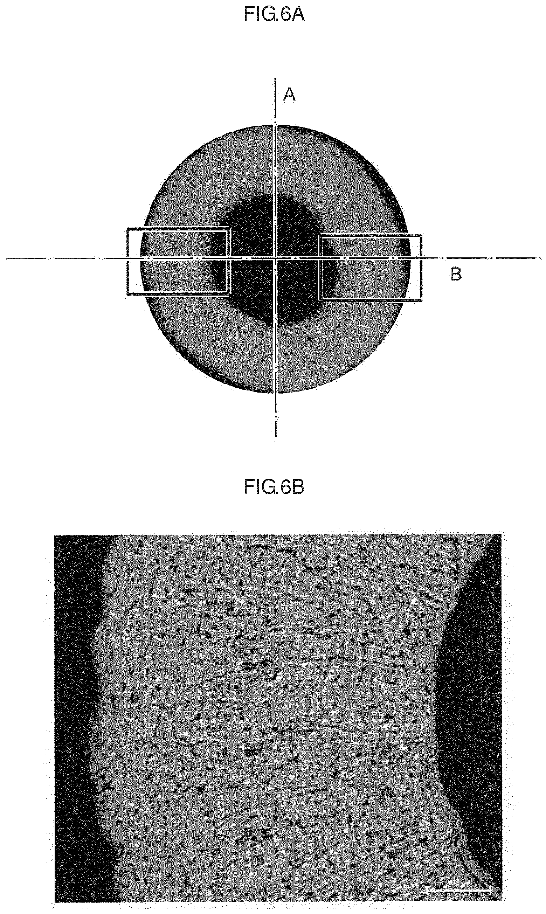

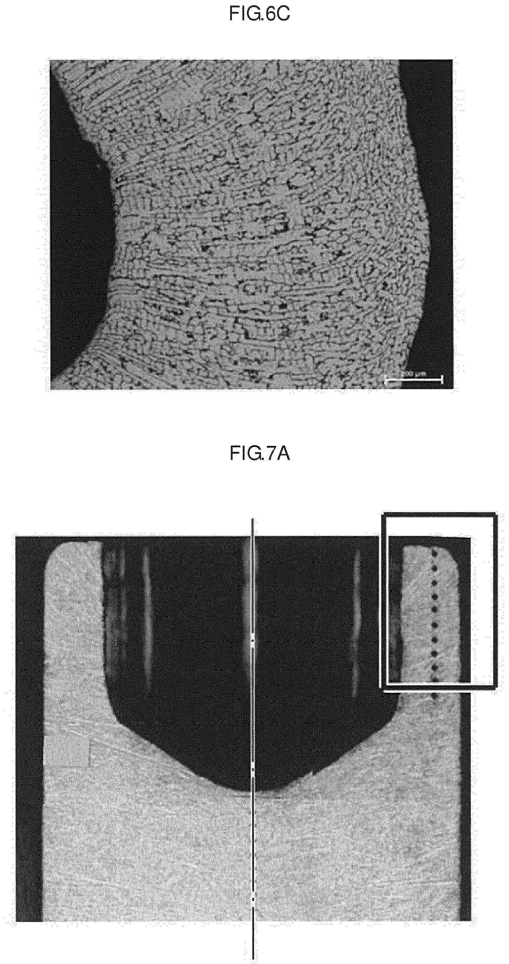

A sample shown in Fig. 6A is a fifth sample of the samples randomly selected from a plurality of samples obtained in Example 1 below. In Fig. 6A, a pattern that looks like white stripe shape ones represent the main axes of the dendrites, showing that the main axes of the dendrites each extend radially toward the central axis of the axial portion existing perpendicularly at the intersection of the lines A and B.

As shown in Figs. 2B, 3B, 4B, and 5B, the average angle between the direction perpendicular to the central axis of the axial portion and the main axes of the dendrites are in the range of 20 degrees as defined in the embodiment allows the adjacent dendrites to slide in the direction of the main axes during caulking, improving the plastic deformation characteristic. A filling ability of the member to be fixed by caulking into the groove or the like increases. The occurrence of the distortion, deformation, or a crack of the heat resistant casting is effectively prevented. The joining strength by caulking further increases.

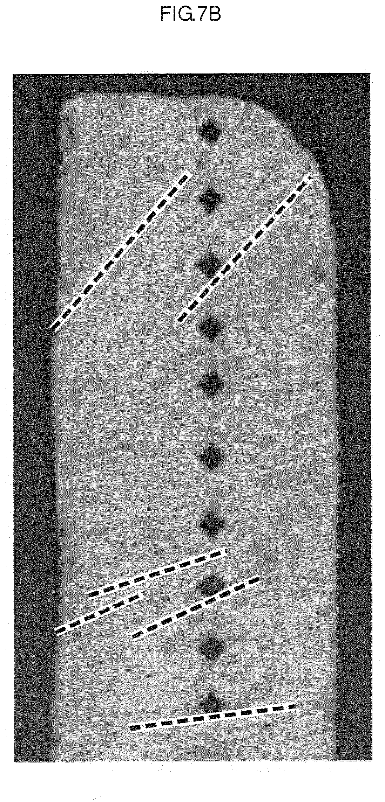

A heat resistant casting according to a Comparative Example 1 shown in Fig. 7B has an average angle of 26.7 degrees, which is out of the range of the embodiment, between the direction perpendicular to the central axis of the axial portion and the main axes of the dendrites in the region subjected to plastic processing.

In the heat resistant casting of the embodiment, an axial diameter of the axial portion subjected to the plastic processing is preferably 15 mm or less, more preferably 10 mm or less, and still more preferably 7 mm or less, from the view point of facilitating the plastic processing such as caulking.

A lower limit value is not particularly limited, but is preferably 2 mm or more to have a sufficient strength to resist the plastic processing.

The heat resistant casting of the embodiment preferably includes iron, more than 0% by mass but equal to or less than 1.4% by mass of carbon, more than 0% by mass but equal to or less than 69% by mass of nickel, and 6% by mass to 52% by mass of chromium.

Examples of the heat resistant alloy preferably used for the manufacture include SCH21, SCH22, or the like, among alloys defined in JIS G5122 (2003) "heat resistant steel and heat resistant alloy casting".

For example, SCH21 is an alloy containing iron, 0.25% by mass to 0.35% by mass of carbon, 19.00% by mass to 22.00% by mass of nickel, 23.00% by mass to 27.00% by mass of chromium, 1.75% by mass or less of silicon, 0.040% by mass or less of phosphorous, 0.040% by mass or less of sulfur, and 1.50% by mass or less of manganese.

The direction of the main axes of the dendrites of the heat resistant casting of the embodiment may be controlled by any method that is not particularly limited. For example, the temperature conditions of a casting mold may be directly controlled, or a crystal fining agent may be used. One or more of such methods may be selected and used as appropriate depending on the purpose. The crystal fining agent is, for example, cobalt aluminate or cobalt oxide.

Conditions of casting, such as a temperature of the molten metal, a fluidity, the position of a pouring port of the molten metal, pouring speed, or a temperature of the casting mold, can be optimized according to the purpose.

A melted heat resistant alloy poured into the casting mold, then cooled and solidified, and taken out the base form heat resistant casting of the embodiment.

After that, cutting or surface polishing may be performed to obtain a finished product.

For example, after the model casting is formed, a portion of the casting in which many preferred modes of dendrites are included in the structure can be obtained by cutting.

The axial portion of the obtained heat resistant casting is combined with a target component to be attached and joined by caulking processing.

The caulking processing, using a tool which is called an insert, is done by positioning the center of the insert-tip to the central axis of the axial portion.

The heat resistant casting of the embodiment having the dendrites in the structure of the region subjected to the plastic processing, and the dendrites have the average angle between the direction perpendicular to the central axis of the axial portion and the main axes of the dendrites in the range of 20 degrees. This allows the caulked portion to deform uniformly by plastic processing and extend evenly to form a nearly circular, in planar view, caulked portion at the distal end of the axial portion, thus achieving stable fixing and preventing the occurrence of a crack or distortion after the caulking processing.

The heat resistant casting of the embodiment having portions in which plastic deformation characteristic is easily performed and, therefore, can be used in a wide variety of applications, such as parts that accompany joining, e.g., engine parts or boiler parts, that are used under high temperature conditions.

In particular, the heat resistance casting can be preferably used in the nozzle vanes of the variable geometry turbocharger that requires heat resistant characteristic.

### EXAMPLES

The present embodiment is described in detail with specific examples.

### [Example 1]

### (Making of Casting Mold)

First, a model die having a recessed shape of the heat resistant casting was produced, and wax was poured into the model die to make a wax model.

To form the first layer of the casting mold, a refractory material was made using slurry that mainly contained zircon sand containing 0.5% by mass of cobalt aluminate. The obtained wax model was coated with the refractory material by immersing and dried to form the first layer of the casting mold.

The slurry contained a mixture of 80% by mass of zircon sand and 20% by mass of fused silica.

A thickness of the first layer was 0.05 mm to 0.50 mm after drying.

Covering and drying the slurry were repeated after the first layer was formed to fabricate the wax model made of the refractory material having an appropriate strength.

Although the coating of the refractory material was done by immersing in the embodiment, coating with a brush or the like or spraying with a spray or the like was also available.

Subsequently, the wax model having the coated layer made of the refractory material was pressurized and heated in a heating furnace at 490 kPa to 1642 kPa and at a temperature in a range of from 150°C to 200°C to remove the wax model by melting.

After drying, a casting mold made of the refractory material was fabricated.

Further, a baking process was done to the casting mold at a temperature in a range of from 1,000°C to 1,200°C to obtain the casting mold having a sufficient strength to resist casting.

### (Casting)

A heat resistant alloy SCH21 (defined in JIS G5122 (2003)) was heated to 1,650°C to obtain a molten metal.

The temperature of the casting mold obtained above was set to 1,000°C to 1,100°C, and the molten metal was poured into the casting mold under reduced pressure at a temperature of 1,650°C.

Solidification of the molten metal was confirmed and left for two hours in the atmosphere, and then the casting mold was broken to obtain the base model of the heat resistant casting.

Subsequently, the base model was sandblasted and cutting worked to obtain the heat resistant casting of Example 1.

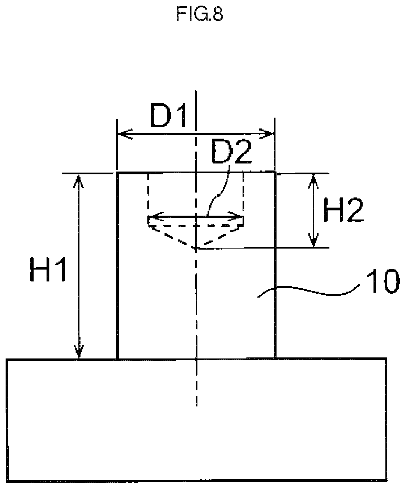

Fig. 8 is a schematic side view of a caulking shaft, and dimensions are as follows:
H1: 4.0 mm
H2: 1.6 mm,
D1: ϕ3.0 mm
D2: cp 1. 8 mm

### (Observation of Cross-sectional Structure)

Four heat resistant castings were randomly selected from plural production lots of Example 1. Each casting was cut along a plane including the central axis of the axial portion, and corroded in aqua regia made of a mixture of hydrochloric acid and nitric acid in a volume ratio of 3:1. A corroded cross-section was washed with water to remove aqua regia, and photographed by a stereo microscope at a magnification of 20 (e.g., see Fig. 2A) and 80 (e.g., see Fig. 2B). Figs. 2B, 3B, 4B, and 5B show photomicrographs of the obtained cross-sections. White streak like lines were observed as the main axes of dendrites. In the drawings, broken lines were drawn on the main axes of dendrites for ease of observation.

As shown in Fig. 2B, the first sample, the average angle between the direction perpendicular to the central axis of the axial portion and the main axes of dendrites was 18.4 degrees. The average angle of the second sample was 10.3 degrees as shown in Fig. 3B, the average angle of the third sample was 12.1 degrees as shown in Fig. 4B, and the average angle of the fourth sample was 3.4 degrees as shown in Fig. 5B.

As shown in the cross-sectional photographs of Figs. 6A to 6C, the main axes of the dendrites were formed radially from the periphery toward the central axis of the axial portion passing the intersection of the lines A and B and extending vertically to the paper surface in Fig. 6A.

### (Performance Evaluation)

The heat resistant casting of Example 1 was used as a caulking member 10 and inserted into an opening 14 of a joining part 12 for caulking.

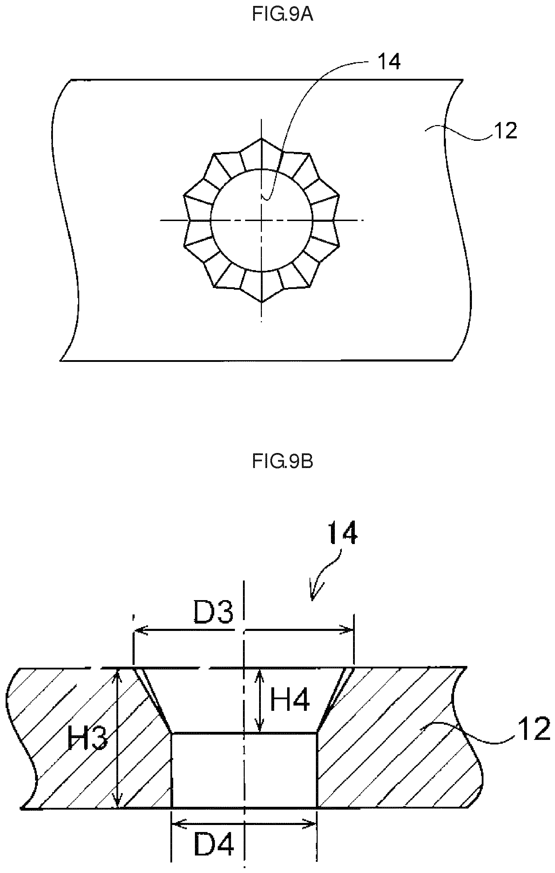

Fig. 9A is a schematic partial plan view of the joining part 12 having the opening 14. Fig. 9B is a schematic partial cross-sectional view in the vicinity of a portion to which the caulking member is inserted. Dimensions in Fig. 9B are as follows:
H3: 3.0 mm
H4: 1.5 mm,
D3: ϕ5.0 mm
D4: cp3.05 mm

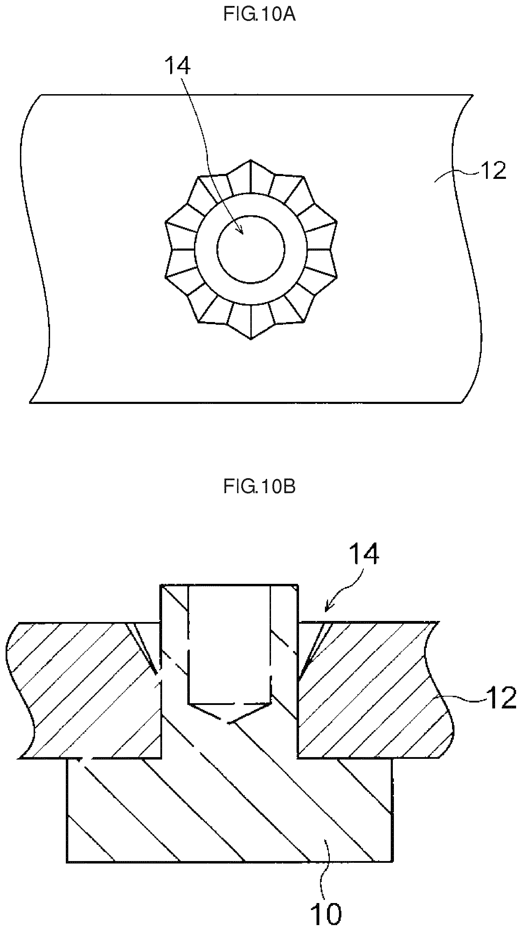

Fig. 10A is a schematic partial plan view showing the caulking member 10 inserted into the opening 14 of the joining part 12. Fig. 10B is a schematic partial cross-sectional view of the caulked portion of Fig. 10A.

A distal end of the caulking member 10 was plastically deformed and joined by a caulking apparatus, US-36, manufactured by YOSHIKAWA IRON WORKS CO., LTD.

The caulking quantity (reduction in height of the axial portion) was 0.95 mm, 1.05 mm, 1.15 mm, and 1.25 mm. At the caulking, the larger reduction means the larger deformation.

Caulking was executed with a flat shape insert in the caulking apparatus at a tip diameter of 4.5 mm, a tip angle of 5 degrees, a load of 2,300 N, and a rotational speed of 1,460 rpm (rotation/minute).

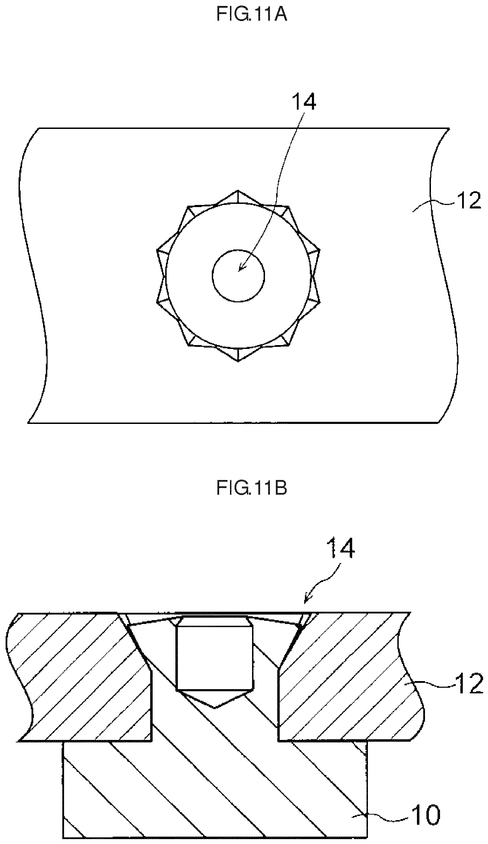

Fig. 11A is a schematic plan view after caulking is executed by inserting the caulking member 10 into the joining part 12. Fig. 11B is a schematic partial cross-sectional view of the caulked portion of Fig. 11A. As shown in Fig. 11B, the distal end of the caulking member 10 was plastically deformed and fixed to fit the shape of the caulked portion of the joining part 12.

### <Required Specification for Caulking Processing Test>

Uniform deformation and no crack in a portion subjected to caulking processing was the required specification. Samples satisfying the required specification passed the test.

160 heat resistant castings were randomly selected from plural production lots of the heat resistant castings of Example 1, and the caulking processing test was executed for every 40 castings under each condition to obtain the following result.
(1) Caulking margin: 0.95 mm
   - All of 40 castings passed.
(2) Caulking margin: 1.05 mm
   - All of 40 castings passed.
(3) Caulking margin: 1.15 mm
   - All of 40 castings passed.
(4) Caulkingmargin: 1.25 mm
   - All of 40 castings passed.

Thus, all of 160 heat resistant castings obtained in Example 1 passed.

### [Comparative Example 1]

A heat resistant casting of Comparative Example 1 was produced by the producing method of Example 1 except for the changing the position of the pouring hole. And then, the average angle between the direction perpendicular to the central axis of the axial portion and the main axes of dendrites were out of the range of 20 degrees.

### (Observation of Cross-sectional Structure)

Fig. 7A is a photomicrograph showing a cross-section view of the heat resistant casting of Comparative Example 1 when cut along a plane including the central axis of the axial portion. Fig. 7B is an enlarged photograph of Fig. 7A.

As shown in Fig. 7B, the average angle between the direction perpendicular to the central axis of the axial portion and the main axes of dendrites was 26.7 degrees, showing that the heat resistant casting was out of the range of the embodiment. In Fig. 7B, white streak like lines were observed as the main axes of the dendrites. In Fig. 7B, broken lines were drawn on the main axes of dendrites for ease of observation. Black spots observed in Figs. 7A and 7B were surface imprint of hardness test, and having no relation with the structure of the heat resistant casting.

160 heat resistant castings were selected from Comparative Example 1, and the caulking processing test was executed for every 40 castings under each condition and obtain the following result.
(1) Caulking margin 0.95 mm
   - 37 out of 40 castings passed.
(2) Caulking margin1.05 mm
   - 36 out of 40 castings passed.
(3) Caulking margin 1.15 mm
   - 35 out of 40 castings passed.
(4) Caulking margin 1.25 mm
   - 31 out of 40 castings passed.

The above result showed that the pass ratio decreases as the larger plastic deformation during the caulking processing increases in the Comparative Example 1.

### [Comparative Example 2]

A heat resistant casting of Comparative Example 2 was produced by the same producing method as the Example 1 except for no grain refiner was used, and then evaluated

### (Observation of Cross-sectional Structure)

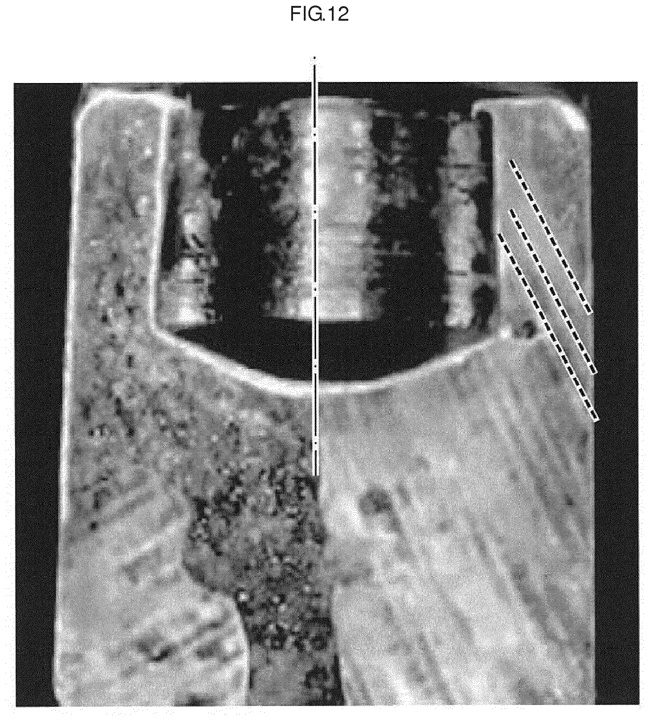

Fig. 12 is a photomicrograph showing a cross-section view of Comparative Example 2 when cut along a plane including the central axis of the axial portion.

As shown in Fig. 12, no dendrite was formed in the left half, while the average angle between the perpendicular direction of the central axis of the axial portion and the main axes of the dendrites was 62.6 degrees in the right half, that was the out of the range of the embodiment. In Fig. 12, broken lines were drawn on the main axes of dendrites for ease of observation.

160 heat resistant castings were selected from Comparative Example 2, and the caulking processing test was executed for every 40 castings under each condition and obtain the following result.
(1) Caulking margin: 0.95 mm
   - 29 out of 40 castings were passed.
(2) Caulking margin: 1.05 mm
   - 23 out of 40 castings passed.
(3) Caulking margin: 1.15 mm
   - 19 out of 40 castings passed.
(4) Caulking margin: 1.25 mm
   - 18 out of 40 castings passed.

The result showed that the pass ratio was low even at a small plastic deformation, and the pass ratio largely decreased as the deformation increased in the Comparative Examlpe2.

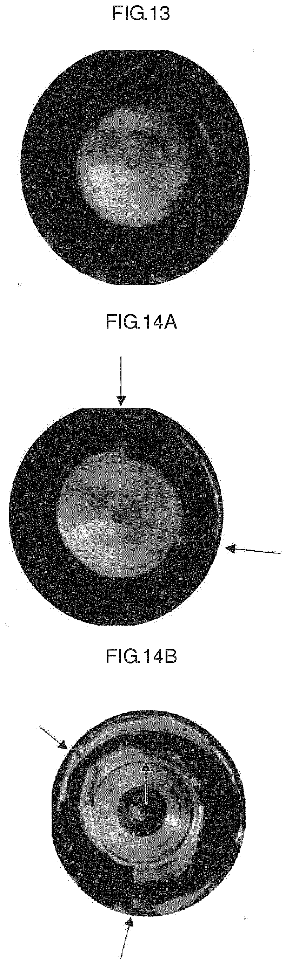

Figs. 13, 14A, and 14B are photographs showing the external appearance of the caulked portions after the test.

Fig. 13 is the photograph showing the external appearance of an example of Example 1 in which all castings passed the test. The plastic processing was uniform and no crack was observed.

Fig. 14A is the photograph showing the external appearance of a failed example of Comparative Example 1. Because of the deformation was not uniform, white color cracks were observed at positions indicated by arrows.

Fig. 14B is the photograph showing the external appearance of a failed example of Comparative Example 2. Because of the deformation was not uniform, white color cracks were observed at positions indicated by arrows.

As described above, the heat resistant casting of the embodiment having the regions with the excellent plastic processing characteristic. It has been found, therefore, that ununiform deformation or cracks do not occur when processing, such as caulking, that needs a large plastic deformation.

The entire disclosures of documents, patents, patent applications, and technical standards are incorporated herein by reference to an extent similar to a case in which documents, patents, patent applications, and technical standards are incorporated herein by reference specifically and individually.

## Claims

1. A heat resistant casting, comprising:
an axial portion; and
dendrites in a structure of a region of the axial portion that is subjected to plastic processing, the dendrites having an average angle between a direction perpendicular to a central axis of the axial portion and main axes of the dendrites of 20 degrees or
less, the heat resistant casting further comprising:
iron;
more than 0% by mass but equal to or less than 1.4% by mass of carbon;
more than 0% by mass but equal to or less than 69% by mass of nickel; and
6% by mass to 52% by mass of chromium.

2. The heat resistant casting according to claim 1, which is a nozzle vane of a turbocharger.

## Patentansprüche

1. Hitzebeständiges Gussteil, umfassend:
einen axialen Abschnitt; und
Dendriten in einer Struktur eines Bereichs des axialen Abschnitts, der einer Kunststoffverarbeitung unterzogen wird, wobei die Dendriten einen durchschnittlichen Winkel zwischen einer Richtung senkrecht zu einer Mittelachse des axialen Abschnitts und Hauptachsen der Dendriten von 20 Grad oder weniger aufweisen, wobei das hitzebeständige Gussteil ferner umfasst:
Eisen;
mehr als 0 Masse-%, aber gleich oder weniger als 1,4 Masse-% Kohlenstoff;
mehr als 0 Masse-%, aber gleich oder weniger als 69 Masse-% Nickel; und
6 Masse-% bis 52 Masse-% Chrom.

2. Hitzebeständiges Gussteil nach Anspruch 1, das eine Düsenschaufel eines Turboladers ist.

## Revendications

1. Moulage résistant à la chaleur, comprenant:
une partie axiale ; et
des dendrites dans une structure d'une région de la partie axiale qui est soumise à un traitement plastique, les dendrites ayant un angle moyen entre une direction perpendiculaire à un axe central de la partie axiale et les axes principaux des dendrites de 20 degrés ou moins, le moulage résistant à la chaleur comprenant, en outre :
du fer ;
entre 0 % et 1,4 % en masse de carbone ;
entre 0 % et 69 % en masse de nickel ; et entre 6 % et 52 % en masse de chrome.

2. Moulage résistant à la chaleur selon la revendication 1, qui est une aube de turbine d'un turbocompresseur.
